# EUROPÄISCHE PATENTANMELDUNG

(11) **EP 4 710 821 A2**
(43) Veröffentlichungstag der Anmeldung: **18.03.2026**
(21) Anmeldenummer: 25227403.0
(22) Anmeldetag: 26.07.2022
(51) Int. Cl.: A47J 43/07

(54) **EINSATZMODUL FÜR EINEN TOPF EINES KÜCHENGERÄTS**

(30) Priorität: 28.07.2021 DE 102021119670; 01.12.2021 DE 102021131680
(62) Teilanmeldung aus: 22757902.6
(71) Anmelder: Wundermix GmbH, 85748 Garching b. München (DE)
(72) Erfinder: Die Erfindernennung liegt noch nicht vor
(74) Vertreter: Patentanwälte Bauer Vorberg Kayser

(57) **Zusammenfassung**

Es ist ein Einsatzmodul (20) für einen Topf (30) eines Küchengeräts offenbart. Das Einsatzmodul (20) weist ein scheibenförmiges Bodenelement (70) auf, wobei ein Außendurchmesser (d_{A}) des Bodenelements (70) an einen sich in Richtung eines Topfbodens (36) des Topfes (30) verringernden Innendurchmesser (d_{I}) des Topfes (30) derart angepasst ist, dass das Einsatzmodul (20) innerhalb des Topfes (30) beabstandet von dem Topfboden (36) in einer Arbeitshöhe (h) an einer Innenwandung (37) des Topfes (30) anliegt. Eine Außenkontur des Bodenelements (70) ist an eine Innenkontur der Innenwandung (37) in der Arbeitshöhe (h) angepasst. Dabei ist das Einsatzmodul (20) dazu ausgebildet, in einem in den Topf (30) eingesetzten Zustand einen Nutzraum (100) innerhalb des Topfes (30) nach oben hin zu begrenzen.

## Beschreibung

Die vorliegende Offenbarung betrifft ein Einsatzmodul für einen Topf eines Küchengeräts. Weiterhin betrifft die vorliegende Offenbarung ein Küchengerät mit einem solchen Einsatzmodul und ein Set aus einem solchen Einsatzmodul und einem Topf für ein Küchengerät.

Es sind elektrische Küchengeräte bekannt, die einen Topf aufweisen, in dem ein Nutzraum ausgebildet ist. Dieser Nutzraum ist zur Aufnahme und zum Bearbeiten von zu bearbeitendem Gut ausgestaltet, beispielsweise Schokolade, Nüsse, Hartkäse, Getreide, Puderzucker, Gewürze, Öl, Eier, Kräuter oder dergleichen. In dem Nutzraum kann ein Funktionselement, beispielsweise Schneidmittel oder Mixmesser, angeordnet sein. Ein derartiger Topf kann in seinem Bodenbereich eine Öffnung aufweisen, durch die sich das Funktionselement erstreckt. Der Topf kann von oben in das Küchengerät eingesetzt werden und umgibt dann das Funktionselement, das von einer Antriebseinheit des Küchengeräts angetrieben wird. Beispielsweise wird ein solches Küchengerät mit einem solchen Topf unter der Bezeichnung Thermomix^{®} vertrieben.

Als nachteilig hat sich ergeben, dass zu bearbeitendes Gut innerhalb des Topfes nicht dauerhaft im Bodenbereich verbleibt, sondern sich während der Bearbeitung im Topf nach oben bewegt. Dieser Nachteil tritt insbesondere bei solchen Bearbeitungsvorgängen auf, bei denen sich im Vergleich zu der Abmessung des Topfes lediglich relativ wenig zu bearbeitendes Gut in dem Topf befindet. Das nach oben bewegte Gut wird dann nicht mehr von dem Funktionselement erfasst und damit nicht mehr wunschgemäß bearbeitet. Dies beeinflusst das Ergebnis des Bearbeitungsvorgangs negativ, da das zu bearbeitende Gut nicht mehr gleichmäßig bearbeitet werden kann. Dies führt dazu, dass der Bearbeitungsvorgang wiederholt unterbrochen werden muss und das nach oben bewegte Gut von einem Benutzer in Richtung des Funktionselements zurückbewegt werden muss.

Alternativ zu einem Unterbrechen des Bearbeitungsvorgangs können Mittel bereitgestellt werden, die nach oben bewegtes Gut während des Bearbeitungsvorgangs automatisch nach unten bewegen. Die konkrete Ausgestaltung derartiger Mittel wird jedoch von dem jeweils zu bearbeitenden Gut abhängen. So wird beispielsweise puderförmiges Gut anders zu behandeln sein als pastenförmiges Gut. Dies führt dazu, dass derartige Mittel auf das zu bearbeitende Gut angepasst sein müssen. Dadurch muss ein Benutzer nicht nur eine größere Anzahl von verschiedenen Mitteln bereithalten, sondern der Benutzer muss auch aus den vorhandenen Mitteln jeweils das korrekte auswählen. Ferner entstehen dadurch nicht unerhebliche Zusatzkosten.

Es ist eine Aufgabe der vorliegenden Offenbarung, Mittel bereitzustellen, die möglichst universell einsetzbar und möglichst kostengünstig sind und mit denen ein Ergebnis bestimmter Zubereitungsvorgänge eines Küchengeräts verbessert werden können.

Diese Aufgabe wird jeweils durch die Merkmalskombinationen der nebengeordneten Ansprüche gelöst.

Weitere Ausgestaltungen und Weiterbildungen der Erfindung offenbaren die jeweiligen Unteransprüche.

Es ist darauf hinzuweisen, dass die in den Ansprüchen einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Es sei ferner angemerkt, dass eine hierin verwendete, zwischen zwei Merkmalen stehende und diese miteinander verknüpfende Konjunktion "und/oder" stets so auszulegen ist, dass in einer ersten Ausgestaltung des beschriebenen Gegenstands lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Es ist erkannt worden, dass es für eine Verbesserung des Zubereitungsergebnisses nicht zwingend erforderlich ist, nach oben bewegtes Gut wiederholt in Richtung des Funktionselements zurückzubefördern. Vielmehr kann durch Vorsehen eines Einsatzmoduls für den Topf des Küchengeräts der Nutzraum begrenzt werden, was ein Nach-oben-Bewegen von zu bearbeitendem Gut reduzieren und das zu bearbeitende Gut zuverlässig bei dem Funktionselement halten kann.

Ein derartiges Einsatzmodul weist ein scheibenförmiges Bodenelement auf. Dieses Bodenelement ist in seiner Dimensionierung an einen Topf angepasst, in den es von oben eingesetzt werden soll. Da die in Rede stehenden Küchengeräte üblicherweise lediglich mit einem oder allenfalls wenigen unterschiedlichen Töpfen betrieben werden können, ist eine derartige Anpassung einfach zu realisieren. Hierzu ist ein Außendurchmesser des Bodenelements an einen sich in Richtung des Topfbodens des Topfes verringernden Innendurchmesser des Topfes angepasst. Dadurch liegt ein in den Topf eingesetztes Einsatzmodul in einer Arbeitshöhe an der Innenwandung des Topfes an. Zusätzlich zu der Anpassung des Außendurchmessers ist das Bodenelement in seiner Außenkontur angepasst, nämlich an eine Innenkontur der Innenwandung des Topfes in der Arbeitshöhe. Dies führt dazu, dass das Einsatzmodul in einem eingesetzten Zustand einen Nutzraum, der bei einem Topfboden des Topfes innerhalb des Topfes gebildet ist, nach oben hin begrenzt. Dadurch wird ein Nutzraum, der für zu bearbeitendes Gut während des Bearbeitungsvorgangs zur Verfügung steht, reduziert. Dies führt wiederum dazu, dass auch bei Bearbeitungsvorgängen mit relativ wenig zu bearbeitendem Gut ein verbessertes Zubereitungsergebnis erzielbar ist. Das Einsatzmodul schafft auf diese Weise in dem Innenraum des Topfes einen Nutzraum, in dem ein Funktionselement angeordnet sein kann, und einen darüber angeordneten zweiten Raum. Auch der zweite Raum kann gegebenenfalls verwendet werden, beispielsweise zum Warmhalten von Lebensmitteln.

Das Einsatzmodul wirkt somit als Volumenverkleinerungsmodul und ist kostengünstig im Spritzgussverfahren herstellbar. Zudem ist seine Handhabung auch deshalb besonders einfach, weil es als ein einziges zusammenhängendes Bauteil ausgebildet sein kann.

Die Arbeitshöhe kann dabei relativ frei definiert sein. Dabei ist es prinzipiell unerheblich, von welchem Referenzpunkt aus die Arbeitshöhe gemessen wird. In einer Ausgestaltung bemisst sich die Arbeitshöhe durch den Abstand, den das Einsatzmodul in einem eingesetzten Zustand von einem Topfboden annimmt. Dabei kann die Arbeitshöhe zu einer Fläche des Bodenelements gemessen werden, die in einem eingesetzten Zustand dem Topfboden zugewandt ist.

Die Arbeitshöhe sollte höchstens so klein sein, dass ein in dem Nutzraum befindliches Funktionselement ohne Beeinträchtigung durch das Einsatzmodul betrieben werden kann. Dies kann insbesondere bedeuten, dass das Einsatzmodul während des Betriebs des Funktionselements nicht in unmittelbaren Kontakt mit dem Funktionselement kommt. Ferner sollte die Arbeitshöhe nicht zu groß sein, da sonst die Funktion des Einsatzmoduls reduziert wird. In einer Ausgestaltung ist die Arbeitshöhe kleiner oder gleich 60% der Höhe des Topfes, in einer anderen Ausgestaltung kleiner oder gleich 50% der Höhe des Topfes.

Prinzipiell kann eine Anpassung der Außenkontur an eine Innenkontur unterschiedlich ausgeprägt sein. So ist denkbar, dass die Außenkontur in einem eingesetzten Zustand lediglich an wenigen dedizierten Punkten die Innenwandung berührt. In einer bevorzugten Ausgestaltung ist die Außenkontur jedoch derart an die Innenkontur angepasst, dass das Einsatzmodul den Nutzraum nicht nur begrenzt, sondern auch abschließt. Dies bedeutet, dass das Bodenelement in einem eingesetzten Zustand nicht nur punktuell, sondern entlang einer Linie an der Innenwandung des Topfes anliegt. Dies kann bis zu einem flüssigkeits- und/oder staubdichten Abschluss gehen.

Eine Anpassung der Außenkontur kann auch umfassen, dass die Außenkontur in einer Seitenansicht konturiert ist. Dies kann durch eine abgerundete Kante des Bodenelements erfolgen, wodurch die Außenkontur auch bei nicht idealem Einsetzen des Einsatzmoduls die Innenwandung zuverlässig berühren kann. Die Außenkontur kann aber auch abgeschrägt sein. Dabei bietet es sich an, dass die Neigung der Außenkontur annähernd gleich zu der Neigung der Innenwandung in der Arbeitshöhe ist. Diese kurze und nicht abschließende Aufzählung zeigt, wie eine Anpassung der Außenkontur an eine Innenkontur erfolgen kann.

Bezüglich der Anpassung des Außendurchmessers des Bodenelements an den Innendurchmesser der Innenwandung sei noch angemerkt, dass die Nutzung einer im Wesentlichen kreisrunden Außenkontur des Bodenelements bzw. einer im Wesentlichen kreisrunden Innenkontur der Innenwandung zwar ein bevorzugtes Ausführungsbeispiel ist, die Konturen jedoch nicht zwingend kreisrund sein müssen. Auch andere Konturen sind prinzipiell denkbar. Gleichzeitig können in den Konturen Erhebungen und/oder Vertiefungen vorgesehen sein. Insofern sind die Begriffe "Innendurchmesser" und "Außendurchmesser" nicht als zwingende Beschränkung auf eine kreisrunde Ausgestaltung zu verstehen.

Der Begriff "scheibenförmiges Bodenelement" bezeichnet ganz allgemein ein im Wesentlichen flaches Bodenelement. In einer Ausgestaltung ist das scheibenförmige Bodenelement in einer Draufsicht als ein Kreisring ausgebildet. Dies bedeutet jedoch nicht, dass das Bodenelement ausschließlich flach ausgebildet sein muss. So können beispielsweise Ausformungen, Verbindungselemente und/oder Stege an dem Bodenelement ausgebildet sein, die sich aus einer Ebene des Bodenelements erheben.

Als "eingesetzter Zustand" wird der Zustand angesehen, in dem sich das Einsatzmodul in einer bestimmungsgemäßen Positionierung in dem Topf des Küchengeräts befindet. Dies bedeutet, dass das Einsatzmodul in der Arbeitshöhe und einer vordefinierten Orientierung innerhalb des Topfes angeordnet ist. Insbesondere bei nicht rotationssymmetrischen Innenkonturen kann dies eine geeignete Drehung des Bodenelements um eine Achse senkrecht zu dem Bodenelement umfassen. Gleichzeitig kann dies bedeuten, dass sich diese Achse in einer Sollorientierung zu dem Topf befindet, beispielsweise senkrecht zu dem Topfboden.

Das Einsatzmodul kann aus verschiedensten Materialien hergestellt sein. Dabei bieten sich insbesondere solche Materialien an, die sowohl robust als auch einfach zu verarbeiten sind. In einer Ausgestaltung ist das Einsatzmodul aus einem Kunststoff gebildet. In einer anderen Ausgestaltung ist das Einsatzmodul aus einem Metall hergestellt, beispielsweise aus Aluminium oder aus Edelstahl.

Das Einsatzmodul kann für verschiedenste Töpfe von verschiedensten Küchengeräten angepasst sein. Vorzugsweise ist das Einsatzmodul jedoch an einen Thermomix^{®} angepasst, beispielsweise einen Thermomix^{®} TM6, TM5 und/oder TM31.

In einer Ausgestaltung weist das Einsatzmodul zusätzlich ein Verbindungsmittel auf, das dazu ausgebildet ist, in einem eingesetzten Zustand aus einem zwischen Bodenelement und Innenwandung gebildeten zweiten Raum einen dritten Raum abzugrenzen, wobei das Verbindungsmittel vorzugsweise senkrecht zu dem scheibenförmigen Bodenelement angeordnet und/oder als Hohlzylinder ausgebildet ist. Durch das Abgrenzen eines dritten Raums kann einerseits der zweite Raum weiter eingeteilt werden. Andererseits kann der dritte Raum weitere Funktionen erfüllen, beispielsweise als Bereich, der zum Einfüllen von zu bearbeitendem Gut nutzbar ist. Das Verbindungsmittel kann zudem in einem eingesetzten Zustand an einem Teil des Topfes anliegen, wodurch der Sitz des Einsatzmoduls in dem Topf weiter stabilisierbar ist und eine axiale Lagerung des Einsatzmoduls im Topf erreichbar ist. In einer Ausgestaltung kann sich das Verbindungsmodul von einer einem Deckel des Topfes oder der Öffnung des Topfes zugewandten Oberseite des Einsatzmoduls im Wesentlichen vertikal nach oben in Richtung des Deckels erstrecken und diesen in mit dem Deckel verschlossenem Zustand des Topfes kontaktieren.

In einer Ausgestaltung ist in dem Bodenelement eine Bodenelementöffnung ausgebildet, wobei die Bodenelementöffnung vorzugsweise auf einer zentralen Achse durch einen Mittelpunkt des Bodenelements angeordnet ist. Auf diese Weise kann ein Zugang zu dem Nutzraum geschaffen werden, um beispielsweise zu bearbeitendes Gut in den Nutzraum einzubringen, auch wenn das Einsatzmodul in dem Topf eingesetzt ist. Eine Anordnung auf einer zentralen Achse kann eine einfache Herstellung des Einsatzmoduls begünstigen.

In einer Weiterbildung sind Verbindungsmittel und Bodenelementöffnung derart relativ zueinander angeordnet, dass die Bodenelementöffnung eine Verbindung zwischen dem Nutzraum und dem dritten Raum bildet. Auf diese Weise kann das Verbindungsmittel bei einem Einbringen von zu bearbeitendem Gut mitwirken, da das Gut besonders einfach zu der Bodenelementöffnung gebracht werden kann. Dabei kann eine Längsachse des Verbindungsmittels, beispielsweise eine Hohlzylinderachse, durch einen Mittelpunkt der Bodenelementöffnung verlaufen.

In einer Ausgestaltung weist das Bodenelement eine Ausformung auf, wobei die Ausformung vorzugsweise kegelförmig und/oder trichterförmig ausgebildet und/oder in einem eingesetzten Zustand vorzugsweise in Richtung des Nutzraumes gerichtet ist. Eine derartige Ausformung kann den Nutzraum weiter begünstigend reduzieren. Die Ausformung kann bis nahe an das Funktionselement reichen, beispielsweise mit einem Abstand von einigen Millimetern, wodurch zu bearbeitendes Gut besser an das Funktionselement geführt werden kann. Eine kegelförmige Ausgestaltung bietet den Vorteil, dass sich zu bearbeitendes Gut durch die Schwerkraft besser von dem Einsatzmodul lösen kann. Eine trichterförmige Ausgestaltung ist insbesondere bei einer Verwendung einer Bodenelementöffnung hilfreich, wobei die Bodenelementöffnung dann an dem Ausgang des Trichters angeordnet sein kann.

In einer Ausgestaltung ist an der Außenkontur des Bodenelements mindestens eine Vertiefung ausgebildet, wobei die mindestens eine Vertiefung vorzugsweise dazu ausgebildet ist, im eingesetzten Zustand in eine an der Innenwandung des Topfes ausgebildete Erhebung, vorzugsweise eine Sicke, Rippe oder Grat, einzugreifen. Derartige Erhebungen, Rippen, Grate oder Sicken sind häufig zur Stabilisierung von Töpfen gebräuchlich. Weist beispielsweise die Innenwandung des Topfes sich vertikal erstreckende Erhebungen auf, wie dies beim Thermomix^{®} der Fall ist, kann das Bodenelement entsprechende, an die Form der Erhebungen angepasste Vertiefungen oder Einkerbungen in seiner Außenkontur aufweisen. In einem eingesetzten Zustand des Einsatzmoduls befinden sich die Erhebungen in den Vertiefungen und verhindern ein Verdrehen oder Rotieren des Einsatzmoduls. Das Einsatzmodul ist also radial gelagert.

In einer Ausgestaltung ist an der Außenkontur mindestens ein Steg ausgebildet, wobei der mindestens eine Steg derart von dem scheibenförmigen Bodenelement absteht, dass eine Außenkante des Stegs in einem eingesetzten Zustand an der Innenwandung des Topfes anliegt. Derartige Stege können die Position und/oder Orientierung des Einsatzmoduls weiter stabilisieren. Ein derartiger Steg kann aus demselben Material bestehen wie das Einsatzmodul selbst. Dabei kann der mindestens eine Steg einstückig mit dem Einsatzmodul gebildet sein. Ein derartiger Steg kann aber auch aus einem anderen Material, beispielsweise einem weicheren Kunststoff oder aus Gummi, gebildet sein. Diese Ausgestaltung verbessert einen Kontakt zwischen Einsatzmodul und Innenwandung des Topfes.

In einer Weiterbildung ist der mindestens eine Steg bei mindestens einen Vertiefung / einer der mindestens einen Vertiefung angeordnet. Eine derartige Anordnung kann die Stabilität der Stege begünstigen. Ferner kann der Steg dann in einem eingesetzten Zustand an einer Erhebung an der Innenwandung des Topfes anliegen, was wiederum die Stabilität der Lagerung verbessern kann.

In einer Weiterbildung ist der mindestens eine Steg zumindest teilweise lippenförmig und/oder zum Abdichten des Nutzraumes ausgebildet. Lippenförmige Stege bieten im eingesetzten Zustand des Einsatzmoduls aufgrund ihrer üblicherweise hohen oder erhöhten Flexibilität eine relativ große Auflagefläche zu der Innenwandung des Topfes. Derartige Stege können den Nutzraum zusätzlich abdichten, wodurch auch Flüssigkeiten zuverlässig in dem Nutzraum bearbeitet und gehalten werden können.

In einer Ausgestaltung des Küchengeräts ist in dem Nutzraum ein Funktionselement angeordnet oder anordenbar, das zum Bearbeiten von in dem Nutzraum befindlichem Gut ausgebildet und vorzugsweise durch eine Antriebseinheit des Küchengeräts antreibbar ist. Auf diese Weise kann das Einsatzmodul besonders günstig wirken. Ein derartiges Funktionselement kann beispielsweise durch Schneidmittel oder Mixmesser gebildet sein.

In einer Ausgestaltung weist das Küchengerät einen Deckel auf, der den Innenraum des Topfes abschließt, und weist das Einsatzmodul ein Verbindungselement auf, wobei das Verbindungselement vorzugsweise derart an den Deckel und/oder an die relative Anordnung des Einsatzmoduls zu dem Deckel angepasst sind, dass sich das Verbindungselement an dem Deckel abstützt. Auf diese Weise kann das Verbindungsmittel eine axiale Lagerung des Einsatzmoduls im Topf bewirken und/oder begünstigen. Wenn an dem Deckel eine Deckelöffnung ausgebildet ist, kann diese Deckelöffnung an dem oberen Ende des Verbindungselements angeordnet sein. Zusammen mit einer Bodenelementöffnung kann damit ein Kanal von der Deckelöffnung über das Innere des Verbindungselement und die Bodenelementöffnung bis in den Nutzraum entstehen. Damit kann zu bearbeitendes Gut während des Betriebs des Küchengeräts in den Nutzraum eingebracht werden.

In einer Weiterbildung ist an dem Deckel eine Auskragung ausgebildet und greift das Verbindungselement in die Auskragung oder die Auskragung in das Verbindungselement ein. Diese Auskragung kann in Richtung Innenraum des Topfes weisen. Dabei kann die Länge des Verbindungselements derart gewählt sein, dass dessen oberer freier Rand an einer Unterseite des Deckels anliegt. Der Durchmesser des Verbindungselements kann so gewählt sein, dass die Auskragung in einem zusammengesetzten Zustand in das Verbindungselement eingreift. Auf diese Weise kann eine Lagerung in horizontale Richtung entstehen.

In einer Ausgestaltung ist das Einsatzmodul im eingesetzten Zustand im Wesentlichen parallel zu dem Topfboden angeordnet. Dadurch entsteht eine definierte Positionierung des Einsatzmoduls in dem Topf.

Weitere Merkmale und Vorteile der Erfindung ergeben sich aus der folgenden Beschreibung nicht einschränkend zu verstehender Ausführungsbeispiele der Erfindung, die im Folgenden unter Bezugnahme auf die Zeichnung näher erläutert werden. In dieser Zeichnung zeigen schematisch:
- Fig. 1: eine Schrägansicht eines Sets mit einem Einsatzmodul gemäß der vorliegenden Offenbarung und einem Topf für ein Küchengerät in einer Explosionsdarstellung,
- Fig. 2: ein Schnitt durch das Set gemäß Fig. 1 mit einem Einsatzmodul in einem eingesetzten Zustand,
- Fig. 3: eine Schrägansicht eines Einsatzmoduls gemäß der vorliegenden Offenbarung von oben,
- Fig. 4: eine Schrägansicht des Einsatzmoduls gemäß Fig. 3 von unten und
- Fig. 5: eine Seitenansicht des Einsatzmoduls gemäß Fig. 3.

In den unterschiedlichen Figuren sind hinsichtlich ihrer Funktion gleichwertige Teile stets mit denselben Bezugszeichen versehen, so dass diese in der Regel auch nur einmal beschrieben werden.

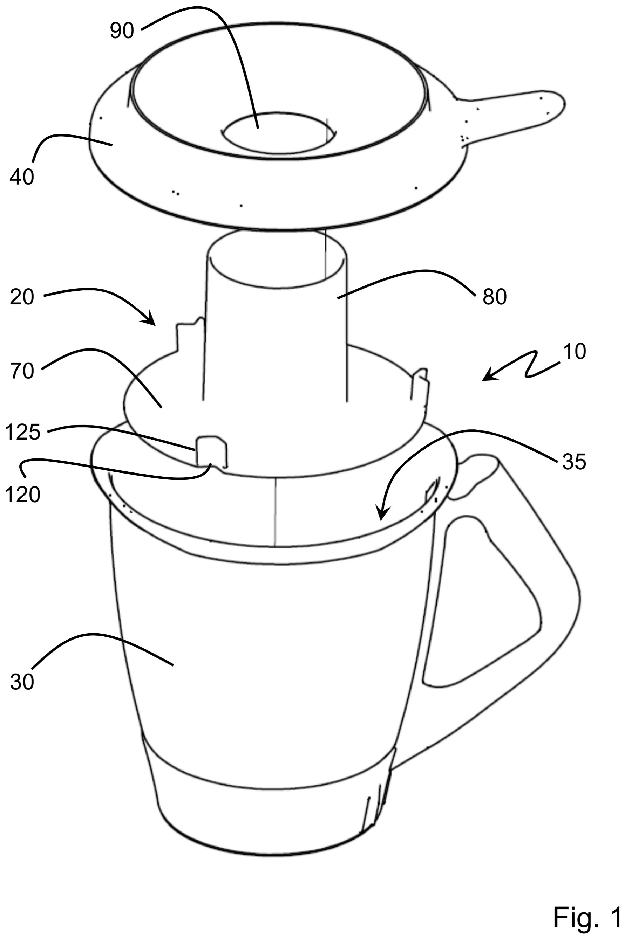

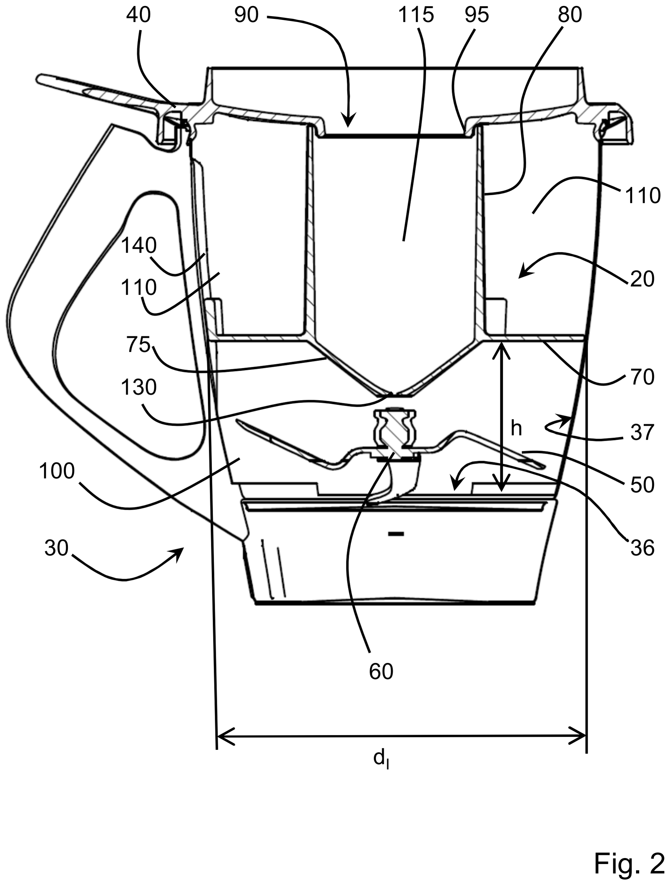

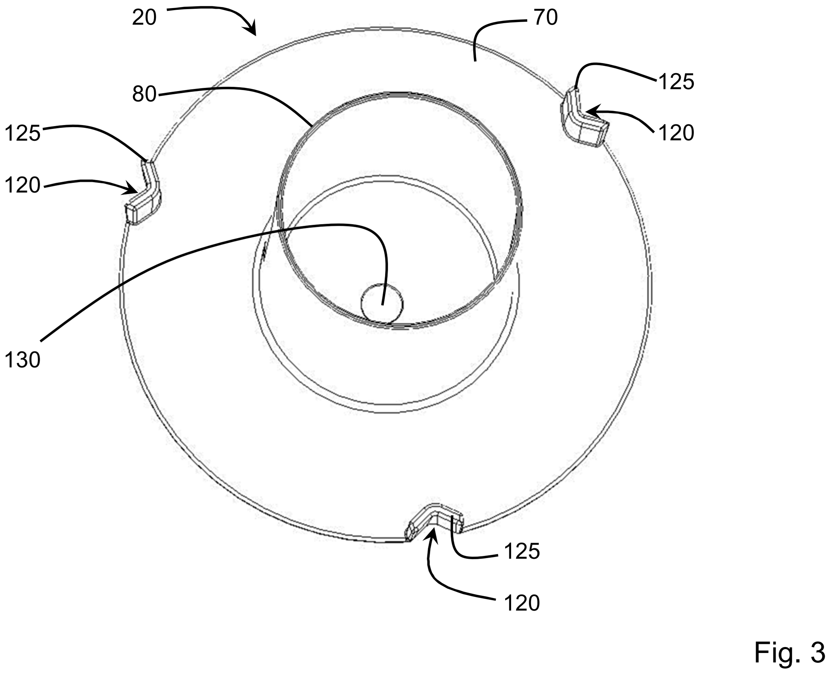

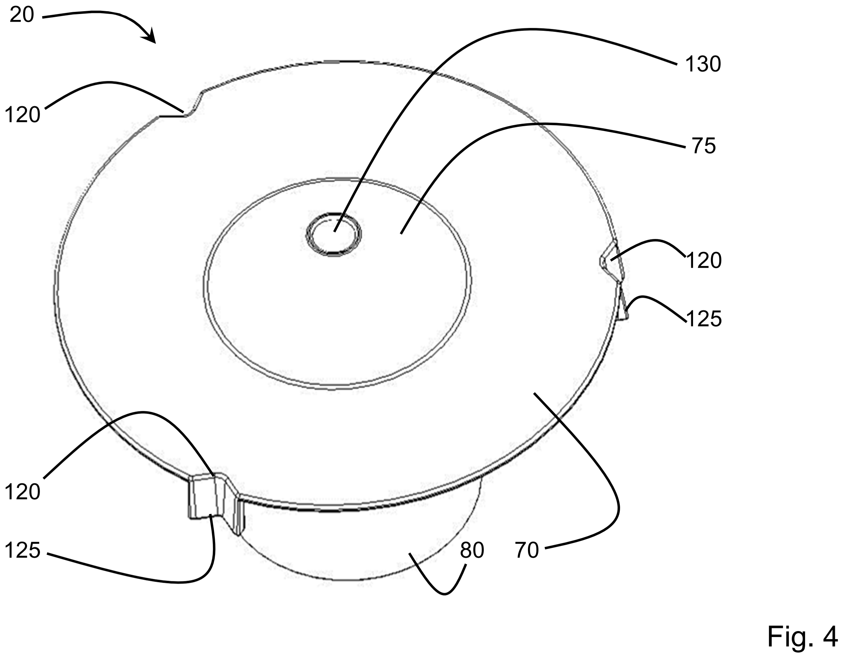

Die Figuren 1 und 2 zeigen verschiedene Ansichten eines Sets 10 aus einem Einsatzmodul 20 gemäß der vorliegenden Offenbarung und einem Topf 30 für ein Küchengerät (nicht dargestellt), wobei Fig. 1 das Set 10 in einer Explosionsdarstellung und Fig. 2 in einer Schnittdarstellung zeigt. Gezeigt ist ein Topf 30, der unter der Bezeichnung Thermomix^{®} vertrieben wird. Die Figuren 3 bis 5 zeigen verschiedene Ansichten des Einsatzmoduls 20, nämlich in perspektivischer Darstellung von oben, von unten und von der Seite.

Fig. 1 verdeutlicht, dass das Einsatzmodul 20 in einen Innenraum 35 des Topfs 30 einsetzbar ist, wobei der Topf 30 weiterhin einen Deckel 40 aufweist. Figur 2 zeigt den zusammengesetzten Zustand des Topfes 30 mit dem Einsatzmodul 20 und dem Deckel 40.

Ein Außendurchmesser d_{A} des Bodenelements 70 ist an einen Innendurchmesser d_{I} des Topfes 30 angepasst. In Fig. 2 ist zu erkennen, dass sich der Innendurchmesser in Richtung Topfboden 36 des Topfes zunehmend verringert. Dadurch kommt das Einsatzmodul 20 in einer Arbeitshöhe h zu liegen, die in dem dargestellten Ausführungsbeispiel als Abstand zwischen einer unteren Fläche des Bodenelements 70 und dem Topfboden 36 definiert ist. Zum Festlegen der Arbeitshöhe sollte der Außendurchmesser d_{A} dem Innendurchmesser d_{I} in der Arbeitshöhe h entsprechen.

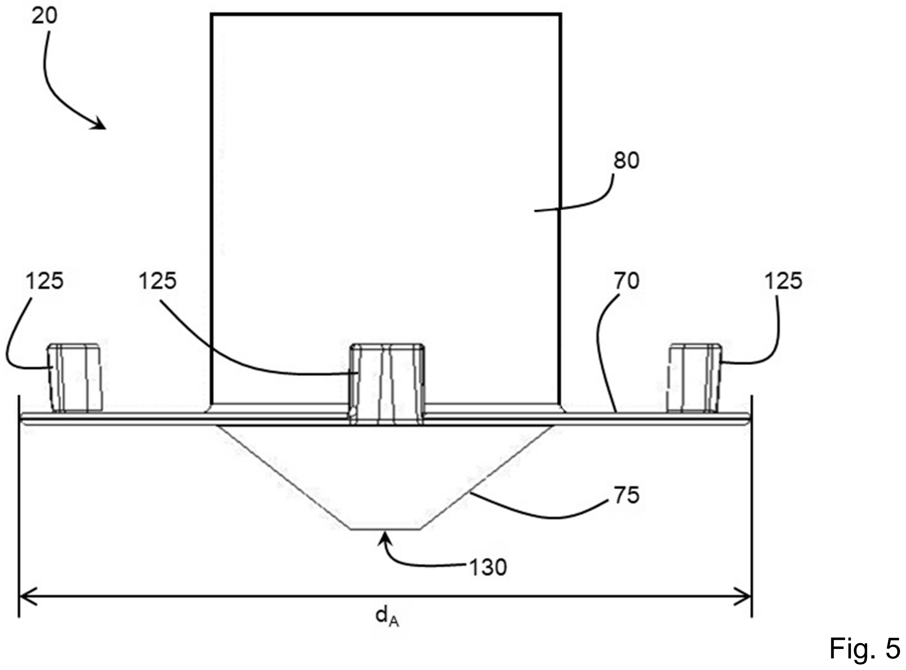

Zusätzlich zu der Anpassung des Durchmessers d_{A}, d_{I} ist eine Außenkontur des Bodenelements 70 an eine Innenkontur des Topfes in der Arbeitshöhe h angepasst, wodurch das Einsatzmodul 20 entlang einer Linie an einer Innenwandung 37 des Topfes anliegt. In Fig. 5 ist zu erkennen, dass die Außenkontur in einer Seitenansicht konturiert, nämlich abgerundet, ist. Dies verbessert die Auflage des Bodenelement 70 an der Innenwandung 37

Im zusammengesetzten Zustand befindet sich unterhalb des Einsatzmoduls 20 ein Funktionselement 50, im gezeigten Beispiel Mixmesser. Die Mixmesser werden von einer Antriebseinheit (nicht dargestellt) des Küchengeräts (ebenfalls nicht dargestellt) über eine Antriebswelle 60 angetrieben.

Das Einsatzmodul 20 weist ein scheibenförmiges Bodenelement 70 auf. Im gezeigten Ausführungsbeispiel erstreckt sich ein Verbindungselement 80 von dem Bodenelement 70 senkrecht nach oben in Richtung des Deckels 40 und kontaktiert diesen. Das Verbindungselement 80 ist dabei als Hohlzylinder ausgebildet. Die Länge des Verbindungselements 80 ist derart gewählt, dass dessen oberer freier Rand an einer Unterseite des Deckels 40 anliegt. Dadurch ist das Einsatzmodul 20 in axialer Richtung gelagert.

Der Deckel weist eine Deckelöffnung 90 auf, die von einer Auskragung 95 umgeben ist. Die Auskragung 95 weist in Richtung des Innenraums 35 des Topfes 30. Im eingesetzten Zustand des Einsatzmoduls 20 erstreckt sich die Auskragung 95 in eine obere Hohlzylinderöffnung des Verbindungselements 80 hinein. Die Auskragung 95 dient als Gegenlager in allen horizontalen Richtungen für das Einsatzmodul 20.

Das Bodenelement 70 unterteilt den Innenraum 35 des Topfes 30 in einen Nutzraum 100 und einen zweiten Raum 110. Das Verbindungselement 80 grenzt zudem einen dritten Raum 115 gegenüber dem zweiten Raum 110 ab.

Das Bodenelement 20 hat eine Bodenelementöffnung 130, die den Nutzraum 100 mit dem darüber befindlichen Innenraum des Verbindungselements 80 - dritter Raum 115 - verbindet. Unterhalb des Verbindungselements 80 ist an dem Bodenelement 70 eine Ausformung 75 ausgebildet, die trichterförmig ausgebildet ist und sich in Richtung des Funktionselements 50 erstreckt. An der Spitze der Ausformung 75 ist die Bodenelementöffnung 130 angeordnet. In einem zusammengesetzten Zustand entsteht durch die Deckelöffnung 90, das Verbindungselement 80 und die Bodenelementöffnung 130 eine Verbindung zu dem Nutzraum 100. Diese Verbindung kann in beide Richtungen genutzt werden, beispielsweise in Richtung des Nutzraums 100 zum Einbringen von zu bearbeitendem Gut und in Richtung der Deckelöffnung 90 zum Entweichen von Dampf aus dem Nutzraum 100.

Das Funktionselement 50 und die Antriebswelle 60 sind im Nutzraum 100 angeordnet, das Verbindungselement 80 erstreckt sich vertikal durch den zweiten Raum 110.

An der Außenkontur des Bodenelements 70 sind drei Vertiefungen 120 ausgebildet, wie in den Figuren 3 bis 5 gut zu erkennen ist. Bei jeder der Vertiefungen 120 sind Stege 125 ausgebildet, die sich in Richtung des Verbindungselements und von dem Nutzraum 100 weg erstrecken. In einem eingesetzten Zustand greifen die Vertiefungen in Erhebungen 140 in dem Topf 30 ein, wodurch eine Lagerung des Einsatzmoduls 20 in Umfangsrichtung erreichbar ist. Die Erhebungen 140 sind durch Sicken gebildet, die sich in Längsrichtung des Topfes erstrecken und zur Stabilisierung dienen. Die Stege 125 stützen sich in eingesetzten Zustand an den Erhebungen 140 ab, was zu einer zusätzlichen Stabilisierung des Einsatzmoduls 20 in dem Topf 30 führt.

Die Bodenelementöffnung 130 ist nahe der Antriebswelle 60 des Funktionselements 50 angeordnet, damit möglichst wenig zu bearbeitendes Gut aus dem Nutzraum 100 durch die Bodenelementöffnung 130 nach oben in den dritten Raum 115 getrieben werden kann. Gleichzeitig verhindert das Einsatzmodul 20, dass zu bearbeitendes Gut durch das Funktionselement 50 während der Bearbeitung des Guts an der Innenwandung 37 des Topfes nach oben geschoben wird.

Hinsichtlich weiterer vorteilhafter Ausgestaltungen wird zur Vermeidung von Wiederholungen auf den allgemeinen Teil der Beschreibung sowie auf die beigefügten Ansprüche verwiesen.

Das in den Figuren gezeigte Ausführungsbeispiel ist nur beispielhaft zu verstehen und kann auch anders ausgeführt sein.

### Bezugszeichenliste

- 10: Set
- 20: Einsatzmodul
- 30: Topf
- 35: Innenraum
- 36: Topfboden
- 37: Innenwandung
- 40: Deckel
- 50: Funktionselement
- 60: Antriebswelle
- 70: Bodenelement
- 75: Ausformung
- 80: Verbindungselement
- 90: Deckelöffnung
- 95: Auskragung
- 100: Nutzraum
- 110: Zweiter Raum
- 115: Dritter Raum
- 120: Vertiefung
- 125: Stege
- 130: Bodenelementöffnung
- 140: Erhebung (Sicke im Topf)

## Patentansprüche

1. Einsatzmodul für einen Topf eines Küchengeräts, wobei das Einsatzmodul (20) ein scheibenförmiges, das heißt vorzugsweise ein im Wesentlichen jedoch nicht notwendigerweise ausschließlich flaches, Bodenelement (70) aufweist, wobei ein Außendurchmesser (d_{A}) des Bodenelements (70) an einen sich in Richtung eines Topfbodens (36) des Topfes (30) verringernden Innendurchmesser (d_{I}) des Topfes (30) derart angepasst ist, dass das Einsatzmodul (20) innerhalb des Topfes (30) beabstandet von dem Topfboden (36) in einer Arbeitshöhe (h) an einer Innenwandung (37) des Topfes (30) anliegt, wobei eine Außenkontur des Bodenelements (70) an eine Innenkontur der Innenwandung (37) in der Arbeitshöhe (h) angepasst ist und wobei das Einsatzmodul (20) dazu ausgebildet ist, in einem in den Topf (30) eingesetzten Zustand einen Nutzraum (100) innerhalb des Topfes (30) nach oben hin zu begrenzen, **dadurch gekennzeichnet, dass** in dem Bodenelement (70) eine Bodenelementöffnung (130) ausgebildet ist, wodurch ein Zugang zu dem Nutzraum (100) bereitgestellt wird, um zu bearbeitendes Gut in den Nutzraum (100) einzubringen, wenn das Einsatzmodul in den Topf eingesetzt ist.

2. Einsatzmodul nach Anspruch 1, **dadurch gekennzeichnet, dass** die Bodenelementöffnung (130) auf einer zentralen Achse durch einen Mittelpunkt des Bodenelements (70) angeordnet ist.

3. Einsatzmodul nach einem der Ansprüche 1 oder 2, **dadurch gekennzeichnet, dass** das Bodenelement (70) eine Ausformung (75) aufweist, wobei die Ausformung (75) vorzugsweise kegelförmig und/oder trichterförmig ausgebildet und/oder in einem eingesetzten Zustand vorzugsweise in Richtung des Nutzraumes (100) gerichtet ist.

4. Einsatzmodul nach einem der Ansprüche 1 bis 3, **dadurch gekennzeichnet, dass** an der Außenkontur des Bodenelements (70) mindestens eine Vertiefung (120) ausgebildet ist, wobei die mindestens eine Vertiefung (120) vorzugsweise dazu ausgebildet ist, im eingesetzten Zustand in eine an der Innenwandung (37) des Topfes (30) ausgebildete Erhebung (140), vorzugsweise eine Sicke, eine Rippe oder ein Grat, einzugreifen.

5. Einsatzmodul nach einem der Ansprüche 1 bis 4, **dadurch gekennzeichnet, dass** an der Außenkontur mindestens ein Steg (125) ausgebildet ist, wobei der mindestens eine Steg (125) derart von dem Bodenelement (70) absteht, dass eine Außenkante des Stegs (125) in einem eingesetzten Zustand an der Innenwandung (37) des Topfes (30) anliegt.

6. Einsatzmodul nach Anspruch 4 und 5, **dadurch gekennzeichnet, dass** der mindestens eine Steg (125) bei der mindestens einen Vertiefung (120) / einer der mindestens einen Vertiefung (120) angeordnet ist.

7. Einsatzmodul nach Anspruch 5 oder 6, **dadurch gekennzeichnet, dass** der mindestens eine Steg (125) zumindest teilweise lippenförmig und/oder zum Abdichten des Nutzraumes (100) ausgebildet ist.

8. Küchengerät umfassend:
einen Topf (30) mit einem Topfboden (36) und einer Innenwandung (37), wobei innerhalb des Topfes (30) an dem Topfboden (36) ein Nutzraum (100) ausgebildet ist, wobei die Innenwandung (37) des Topfes (30) einen Innendurchmesser (d_{I}) und in Umfangsrichtung eine Innenkontur aufweist, wobei sich der Innendurchmesser (d_{I}) in Richtung des Topfbodens (36) verringert, und
ein Einsatzmodul (20), wobei das Einsatzmodul (20) in einen Innenraum (35) des Topfes (30) einsetzbar ist, wobei das Einsatzmodul (20) ein scheibenförmiges Bodenelement (70) aufweist, das einen Außendurchmesser (d_{A}) und eine Außenkontur aufweist, wobei der Außendurchmesser (d_{A}) an den Innendurchmesser (d_{I}) des Topfes (30) derart angepasst ist, dass das Einsatzmodul (20) in einem eingesetzten Zustand in einer Arbeitshöhe (h) innerhalb des Topfes (30) an der Innenwandung (37) anliegt, wobei die Außenkontur des Bodenelements (70) an die Innenkontur des Topfes (30) in der Arbeitshöhe (h) angepasst ist und wobei das Einsatzmodul (20) den Nutzraum (100) nach oben hin begrenzt, wobei in dem Nutzraum (100) ein Funktionselement (50) angeordnet oder anordenbar ist, das zum Bearbeiten von in dem Nutzraum (100) befindlichem Gut ausgebildet und durch eine Antriebseinheit des Küchengeräts antreibbar ist, **dadurch gekennzeichnet, dass** an der Außenkontur des Bodenelements (70) mindestens eine Vertiefung (120) ausgebildet ist, wobei die mindestens eine Vertiefung (120) vorzugsweise dazu ausgebildet ist, im eingesetzten Zustand in eine an der Innenwandung (37) des Topfes (30) ausgebildete Erhebung (140), vorzugsweise eine Sicke, eine Rippe oder ein Grat, einzugreifen.

9. Küchengerät nach Anspruch 8, **dadurch gekennzeichnet, dass** an der Außenkontur mindestens ein Steg (125) ausgebildet ist, wobei der mindestens eine Steg (125) derart von dem Bodenelement (70) absteht, dass eine Außenkante des Stegs (125) in einem eingesetzten Zustand an der Innenwandung (37) des Topfes (30) anliegt.

10. Küchengerät nach Anspruch 8 und 9, **dadurch gekennzeichnet, dass** der mindestens eine Steg (125) bei der mindestens einen Vertiefung (120) / einer der mindestens einen Vertiefung (120) angeordnet ist.

11. Küchengerät nach Anspruch 9 oder 10, **dadurch gekennzeichnet, dass** dass der mindestens eine Steg (125) zumindest teilweise lippenförmig und/oder zum Abdichten des Nutzraumes (100) ausgebildet ist.
